# EUROPEAN PATENT APPLICATION

(11) **EP 1 422 807 A2**
(43) Date of publication of application: **26.05.2004**
(21) Application number: 03026121.8
(22) Date of filing: 13.11.2003
(51) Int. Cl.: H02K 1/27, H02K 33/12

(54) **Reciprocating rotary permanent magnet motor**

(30) Priority: 20.11.2002 JP 2002336247
(71) Applicant: Minebea Co., Ltd., Nagano-ken 389-0293 (JP)
(72) Inventor: Moritsugi, Katsuyuki, Minebea Co., Ltd., Kitasaku-gun Nagano-ken 389-0293 (JP)
(74) Representative: Konle, Tilmar, Dipl.-Ing.

(57) **Abstract**

A stator 10 has a pair of pole parts 11 extending inwardly in opposite directions. The pole parts 11 are wrapped with inductance coils 12. A rotor 14 is equipped with a pair of permanent magnets 13 that essentially face toward the pole parts 11. The permanent magnets 13 are magnetized radially, and are shifted angularly from positions in direct radial alignment with the pole parts 11. An excitation , current is applied to the coils 12 to cause the rotor 14 to move through a specific angular range by a magnetic field induced in the pole parts 11 and magnetic fields of the permanent magnets 13. The radial misalignment between the pole parts 11 and the permanent magnets 13 improves the performance characteristics of the rotary solenoid.

## Description

### CROSS REFERENCE TO RELATED APPLICATION

This application is based on and incorporates by reference Japanese Patent Application No. 2002-336247, which was filed on 20 November 2002.

### BACKGROUND OF THE INVENTION

The present invention relates to rotary solenoids in which the rotor undergoes reciprocating motion within a specific rotational range due to interaction between permanent magnets on a rotor and induction coils on a stator.

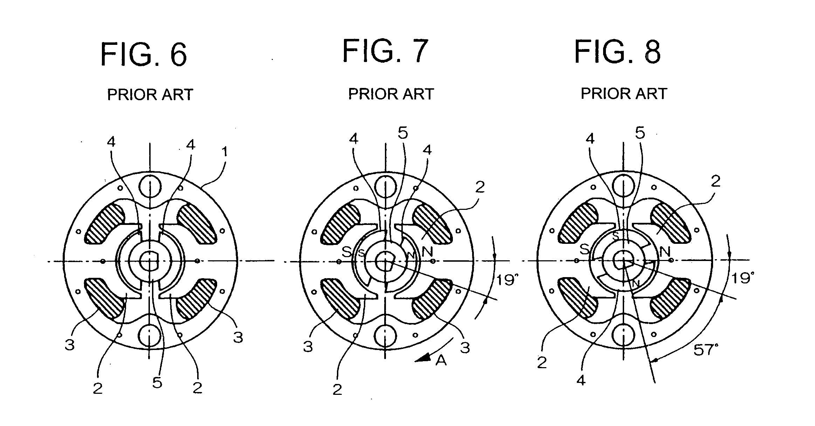

Conventionally, rotary solenoids in which a rotor undergoes reciprocating motion within a specific angular range have been used for ejecting sports balls in sporting equipment. FIGS. 6-8 illustrate the structure and operation of a conventional rotary solenoid. The rotary solenoid is equipped with the following: a stator 1, which has a pair of opposed pole parts 2 that face each other and extend inwardly; induction coils 3, which are wrapped around the pole parts 2, respectively; and a rotor 5, which is fixed to a pair of permanent magnets 4 that face the pole parts 2, respectively. The magnets 4 are located within the stator 1, as shown.

In the rotary solenoid of FIGS 6-8, when there is no excitation current in the inductance coils 3, in other words, when there is no inducted magnetic field, the permanent magnets 4 attract the pole parts 2, as shown in FIG. 6, and the rotor 5 stops in the position where the pole parts 2 face the permanent magnets 4. In the non-magnetic state, when the rotor 5 is rotated to a starting point (approximately 19° from the position of Fig. 6) as shown in FIG. 7, and excitation current is applied to the inducted coils 3, the pole parts 2 are caused to have the same polarity as the polarity of the facing permanent magnets 4.

As a result, the permanent magnets 4, receive a repulsive force from the facing pole parts 2, and rotate in the direction shown by arrow A in FIG. 7. The rotor 5, as shown in FIG. 8, rotates until it strikes a stopper (not shown) where it stops. The stopper is located at a stopping point (approximately 76° from the rotor position of Fig. 6) from which the rotor 5 can return by itself. In the state of Fig. 8, if the excitation current is cut, the magnetic force at the pole parts 2 is removed, and the permanent magnets 4 of the stator 5 are once again attracted to the pole parts 2. Thus, the rotor 5 returns to the position shown in FIG. 6.

When the rotary solenoid described above is applied to an arm for ejecting balls, it is desirable that the angle of rotation over which the action can occur be large in order to accelerate the angular velocity of the arm. Further, it is desirable that a large torque be generated with small electric power consumption. Given these goals, there are rotary solenoids equipped with multiple permanent magnets for the rotors and multiple parts corresponding to the permanent magnets. For example, see published Japanese patent application 2000-175419.

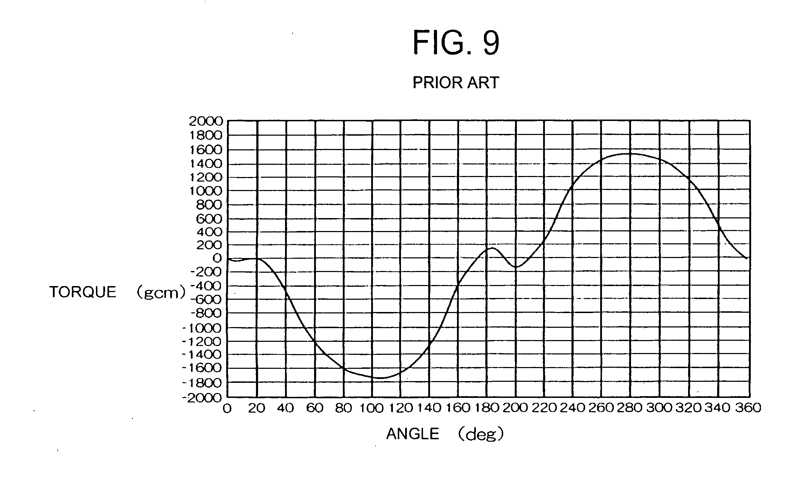

However, in rotary solenoids using the conventional technology shown in FIGS. 6-8, the structure is such that the positions of the permanent magnets (or the poles) are symmetrical. Because of this, the ranges of the dead points in a magnetized state and in a non-magnetized state are large. This is illustrated in FIG. 9, which is a graph showing the torque characteristics of the rotary solenoid of Figs. 6-8. In the conventional rotary solenoid of Figs. 6-8, there is essentially no torque in the range of rotor rotation between 0° and 30°, as shown in Fig. 9, where 0° is the rotor position shown in Fig. 6, at which the permanent magnets 4 are directly in alignment with the respective pole parts 2.

Therefore, in conventional rotary solenoids, it is necessary that the angle between the rotor position of Fig. 6 and the rotor position of the starting point be large for starting the rotation in the magnetized state (approximately 19° in the example shown in Figs. 6-8.) so that the device will return to its starting point automatically. This makes the angular range over which the motion can be achieved small (approximately 57° in the example of Figs. 6-8.). Furthermore, in order to produce a large torque, it is necessary to have a rotary solenoid that is physically large, and that consumes a relatively large amount of power.

Furthermore, for the reasons described above, it has been difficult to produce a continuously stable torque and the angular velocities required in devices such as sporting equipment. Furthermore, in athletic facilities with a great deal of sporting equipment, high capacity power supply equipment has been required, leading to the problem of excessive equipment and energy costs.

Furthermore even though a higher torque can be achieved by increasing the number of permanent magnets and the number of poles with the conventional technology as described in published Japanese patent application 2000-175419, this enlarges the rotary solenoid and leads to increased energy consumption. Furthermore, such an increase does not address the issue of increasing the angular range of motion.

### SUMMARY OF THE INVENTION

An object of the invention is to provide a rotary solenoid that is able to increase the angular range and the torque while reducing power consumption.

Basically, the invention is a rotary solenoid including a rotor, which has a center axis. At least two permanent magnets are located on the rotor, and polar axes of the permanent magnets are positioned about the center axis at predetermined angular locations. A stator is located about the rotor. The stator includes pole parts, the number of which matches the number of permanent magnets. A coil is wrapped about each pole part. Polar axes of the pole parts are positioned about the center axis at predetermined angular locations. The rotor is driven in a predetermined angular range by magnetic fields induced by induction currents in the coils and by magnetic fields of the permanent magnets. The angular locations of the permanent magnets and the angular locations of the pole parts are mismatched such that there is no position of the rotor at which the polar axes of the permanent magnets are radially aligned with the polar axes of the pole parts.

In another aspect of the invention, the stator includes at least two pairs of pole parts and the rotor includes at least two pairs of permanent magnets.

In another aspect of the invention, the polar axes of the pole parts are uniformly distributed about the axis of the rotor, and the polar axes of the permanent magnets are non-uniformly distributed about the axis of the rotor.

In another aspect of the invention, the polar axes of the pole parts are separated from one another by equal angular intervals, and the polar axes of the permanent magnets are separated from one another by unequal angular intervals.

In another aspect of the invention, the distribution of the permanent magnets on the rotor is imbalanced.

From another perspective, the invention is basically a rotary solenoid including a rotor, which has a center axis. The rotor includes at least two permanent magnetic polar axes at predetermined angular locations. A stator is located about the rotor, and the stator includes electromagnetic poles, each of which has a polar axes. The number of the electromagnetic poles on the stator matches the number of permanent magnetic polar axes on the rotor. The polar axes of the electromagnetic poles are positioned about the axis of the rotor at predetermined angular locations, and the rotor is driven in a predetermined angular range by magnetic fields created by the electromagnetic poles and by permanent magnetic fields of the rotor. The angular locations of the permanent magnetic polar axes and the angular locations of the polar axes of the electromagnetic poles are mismatched such that there is no position of the rotor at which the permanent magnetic polar axes of the rotor are radially aligned with the polar axes of the electromagnetic poles.

This construction improves the performance characteristics of the rotary solenoid, as discussed in more detail below.

### BRIEF DESCRIPTION OF THE DRAWINGS

The accompanying figures, in which like reference numerals refer to identical or functionally similar elements throughout the separate views and which, together with the detailed description below, are incorporated in and form part of the specification, serve to further illustrate various embodiments and to explain various principles and advantages all in accordance with the present invention.

FIGS. 1-3 are cross sectional diagrams showing the basic structure and operation of a rotary solenoid according to a first embodiment of the present invention;

FIG. 4 is a graph showing the angle-torque characteristics of a rotary solenoid according to the embodiment of Fig. 1;

FIG. 5 is a cross sectional diagram showing another embodiment of the present invention;

FIGS. 6, 7 and 8 are cross sectional diagrams showing the basic structure and operation of a conventional rotary solenoid;

FIG. 9 is a graph showing the angle-torque characteristics of a conventional rotary solenoid;

### DETAILED DESCRIPTION OF THE PREFERRED EMBODIMENTS

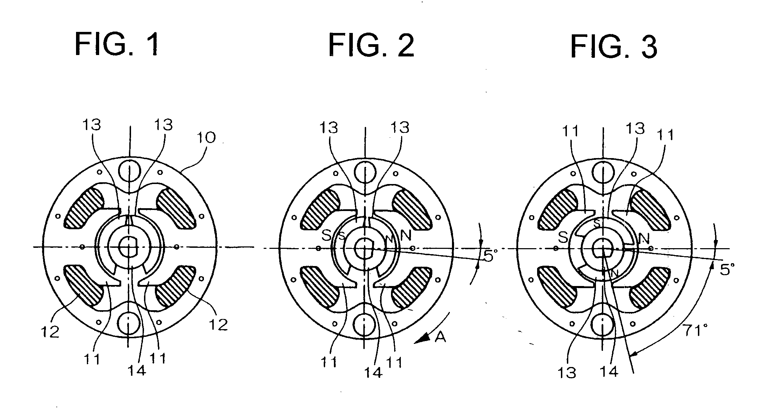

Referring to FIG. 1, a rotary solenoid has a stator 10 that has a pair of pole parts 11 facing in opposite directions and extending towards the central axis. Induction coils 12 are wrapped upon the pair of pole parts 11, and a rotor 14 is located on the inside of the stator 10. Each pole part 11 has a polar axis that is radial and perpendicular to the axis of the rotor 14. The pole parts 11 are symmetrical about a plane that includes the central axis, as shown. In other words, the pole parts are uniformly arranged about the axis of the rotor 14.

The magnets 13 essentially face the pole parts 11. The permanent magnets 13 are magnetized in the direction of their thickness such that their polar axes are radial and perpendicular to the axis of the rotor. The permanent magnets 13 are not uniformly arranged about the axis of the rotor. In other words, at least one of the permanent magnets 13 is shifted in an angular direction such that the permanent magnets 13 cannot both be radially aligned with the corresponding pole parts 11, as shown in Fig. 1-3. That is, the angular spacing between the magnets 13 is non uniform, and at least one of the magnets 13 is angularly offset from, or radially misaligned with, the corresponding pole part 11. To be more specific, the center, or polar axis, of at least one of the permanent magnets 13 is radially misaligned with the center, or polar axis, of the corresponding pole part 11.

When the rotor 14 is rotated to the starting point (a rotor position approximately 5° from the rotor position of Fig. 6) a direct current excitation current is applied to the inductance coils 12 to cause each pole part 11 to have the same polarity as the corresponding permanent magnet 13. The excitation current is cut off when the rotor 14 has stopped at the stopping position. The rotor 14 engages a physical stopper, or abutment (not shown), at the stopping position. The stopping point is a point from which the rotor 14 can return automatically when the excitation current is cut off. The rotor 14 undergoes reciprocating motion within a specific angular range according to the attractive forces and repulsive forces that are generated between the pole parts 11 and the permanent magnets 13 due to the supply and termination of the DC excitation current to the inductance coils 12.

Next, the operation of the rotary solenoid according to the exemplary embodiment of Figs 1-3 will be explained. When the rotary solenoid is in a state in which there is no excitation current in the inductance coils 12, or in other words, when the solenoid is in a non-magnetized state, the permanent magnets 13 are attracted to the pole parts 11, as shown in FIG. 1, and thus the rotor 14 stops in an equilibrium position at which the permanent magnets 13 substantially face the respective pole parts 11. As shown in Fig. 2, when the rotor 14 is rotated to the starting point, which is located at a position that is approximately 5° from the equilibrium position of Fig. 1, in the non-magnetized state, a DC excitation current is applied to the inductance coils 12 so that each pole part 11 will have the same polarity as the corresponding permanent magnet 13.

The result is that the permanent magnets 13 will receive a repulsive force from the corresponding pole parts 11, and will rotate in the direction of arrow A in FIG.2. The rotor 14, as shown in FIG. 3, will stop after it has rotated to the stopping point (which is approximately 76° from the rotor position of Fig. 1). If the DC excitation current is stopped when the rotor 14 is in the state of Fig. 3, the magnetic force of the pole parts 11 will be removed, and the permanent magnets 13 of the rotor 14 will again be attracted to the pole parts 11, and the rotor 14 will return to the position shown in FIG. 1.

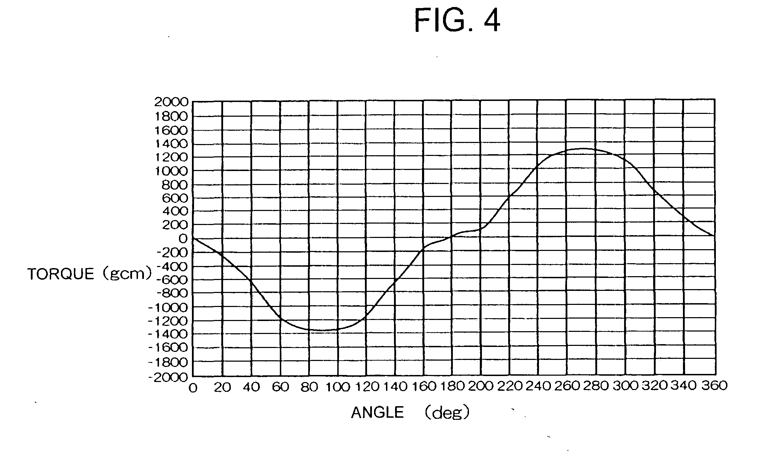

FIG. 4 is a graph showing the relationship between the angle of rotation of the rotary solenoid and the torque characteristics of the embodiment shown in Figs. 1-3. In the rotary solenoid according to the present invention, significant torque is produced in the range of rotor rotation between 0° and 20°, where 0° is the equilibrium rotor position illustrated in Fig. 1. Furthermore, the generation of a repulsive torque is eliminated, and this improves the characteristics of the rotary solenoid (its range of rotation, angular velocity, and torque stability).

As described above, in the rotary solenoid, the pole parts 11, which are located on the stator 10, are symmetrical about a plane that includes the center axis, and at least one of the permanent magnets 13 on the rotor 14 is angularly shifted toward the other permanent magnet 13. As a result, the angle between the rotor position of Fig. 1 and the starting point is relatively small. When the rotor 14 is rotated to the starting point while there is an excitation current in the coils 12, which are wrapped on the respective pole parts 11, the rotor 14 receives a rotational force in the direction of rotation. The interaction of the magnetic field induced in the pole parts 11 and the magnetic field of the pair of permanent magnets 13 drives the rotor 14 through a specific angular range. Consequently, the rotational angle and the torque are increased, and the power consumption is reduced.

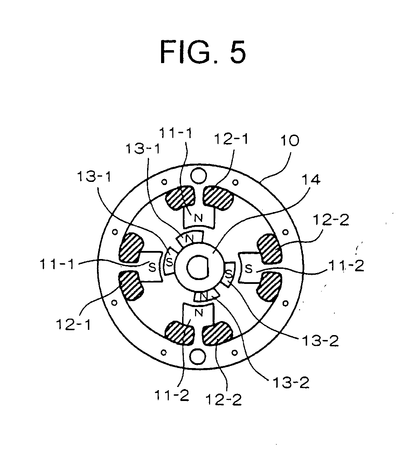

FIG. 5 is a diagram showing the basic structure of a rotary solenoid according to another embodiment of the present invention. In the first embodiment of Figs. 1-3, the rotary solenoid has a pair of permanent magnets 13 and a pair of pole parts 11. However, the rotary solenoid can have additional permanent magnets and an equal number of pole parts, as shown in Fig. 5. In the example of FIG.5, two pairs of permanent magnets 13-1, 13-2 and two pairs of pole parts 11-1, 11-2 are provided, but the numbers of pole parts and permanent magnets are not so limited. The pole parts 11-1, 11-2 each have a polar axis that is radial and perpendicular to the axis of the rotor 14. The pole parts are spaced apart with uniform angular intervals, as shown. In other words, the pole parts 11-1 and 11-2 are symmetrically arranged.

The permanent magnets 13-1 are magnetized in the direction of their thickness such that the polar axes of the magnets 13-1 are radial and perpendicular to the axis of the rotor 14. At least one magnet 13-1 of the first pair is shifted angularly from a position in direct radial alignment with a corresponding one of the pole parts 11-1. In other words, the magnets 13-1 are angularly offset from the corresponding pole parts 11-1, as shown. Furthermore the permanent magnets 13-2 of the second pair are magnetized in the direction of their thickness such that the polar axes of the permanent magnets are radial and perpendicular to the axis of the rotor 14. At least one of the magnets 13-2 of the second pair is shifted angularly from a position in direct radial alignment with a corresponding one of the pole parts 11-2. Therefore, there is radial misalignment between the permanent magnets 13-1, 13-2 and the corresponding pole parts 11-1, 11-2. To be more specific, the center, or polar axis, of at least one of the permanent magnets 13-1, 13-2 of each pair is radially misaligned with the center, or polar axis, of the corresponding pole part 11-1, 11-2. The operation of the rotary solenoid of Fig. 5 is the same as that of the rotary solenoid of Figs. 1-3 except that there are additional poles.

In the embodiments described above, it was described that the permanent magnets 13 of the rotor 14 are angularly shifted from positions in direct radial alignment with the corresponding pole parts 11, but the present invention is not so limited. The permanent magnets 13 can be located at uniform angular intervals, and the pole parts 11 of the stator 10 may be angularly shifted from positions of direct radial alignment with the permanent magnets 13 to obtain the same results. This is true for rotary solenoids having multiple permanent magnets and multiple pole parts as well.

Furthermore, in the illustrated embodiments, permanent magnets were used; however, magnetized portions of the rotor can be used instead. In other words, a position of magnetization on the rotor can be shifted to achieve the same result as shifting the position of a permanent magnet.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiments were chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. A rotary solenoid comprising:
a rotor, which has a center axis, wherein at least two permanent magnets are located on the rotor, and polar axes of the permanent magnets are positioned about the center axis at predetermined angular locations;
a stator that is located about the rotor, wherein the stator includes pole parts, the number of which matches the number of permanent magnets, and a coil is wrapped about each pole part, wherein polar axes of the pole parts are positioned about the center axis at predetermined angular locations, and the rotor is driven in a predetermined angular range by magnetic fields induced by induction currents in the coils and by magnetic fields of the permanent magnets, wherein the angular locations of the permanent magnets and the angular locations of the pole parts are mismatched such that there is no position of the rotor at which the polar axes of the permanent magnets are radially aligned with the polar axes of the pole parts.

2. A rotary solenoid according to claim 1, wherein the stator includes at least two pairs of pole parts and the rotor includes at least two pairs of permanent magnets.

3. A rotary solenoid according to claim 1, wherein the polar axes of the pole parts are uniformly distributed about the axis of the rotor, and the polar axes of the permanent magnets are non-uniformly distributed about the axis of the rotor.

4. A rotary solenoid according to claim 1, wherein the polar axes of the pole parts are separated from one another by equal angular intervals, and the polar axes of the permanent magnets are separated from one another by unequal angular intervals.

5. A rotary solenoid according to claim 1, wherein the distribution of the permanent magnets on the rotor is imbalanced.

6. A rotary solenoid comprising:
a rotor, which has a center axis, wherein the rotor includes at least two permanent magnetic polar axes at predetermined angular locations;
a stator that is located about the rotor, wherein the stator includes electromagnetic poles, each of which has a polar axes, and the number of the electromagnetic poles on the stator matches the number of permanent magnetic polar axes on the rotor, wherein the polar axes of the electromagnetic poles are positioned about the axis of the rotor at predetermined angular locations, and the rotor is driven in a predetermined angular range by magnetic fields created by the electromagnetic poles and by permanent magnetic fields of the rotor, wherein the angular locations of the permanent magnetic polar axes and the angular locations of the polar axes of the electromagnetic poles are mismatched such that there is no position of the rotor at which the permanent magnetic polar axes of the rotor are radially aligned with the polar axes of the electromagnetic poles.

7. A rotary solenoid according to claim 6, wherein the stator includes at least two electromagnetic poles and the rotor includes at least two pairs of permanent magnetic polar axes.

8. A rotary solenoid according to claim 6, wherein the polar axes of the electromagnetic poles of the stator are uniformly distributed about the axis of the rotor, and the permanent magnetic polar axes are non-uniformly distributed about the axis of the rotor.

9. A rotary solenoid according to claim 6, wherein the polar axes of the electromagnetic poles are separated from one another by equal angular intervals, and the permanent magnetic polar axes are separated from one another by unequal angular intervals.

10. A rotary solenoid according to claim 6, wherein the distribution of the permanent magnetic polar axes on the rotor is asymmetrical.
